Europäisches Patentamt

European Patent Office

Office européen des brevets

(19)

(11) Publication number: **0 300 751**
**A2**

## EUROPEAN PATENT APPLICATION

(12)

(21) Application number: **88306632.6**

(22) Date of filing: **20.07.88**

(51) Int. Cl.4: **C08G 63/18 , C08L 67/02**

(30) Priority: **23.07.87 IT 2140287**

(43) Date of publication of application:
**25.01.89 Bulletin 89/04**

(84) Designated Contracting States:
**DE FR GB IT NL**

(71) Applicant: **Montedison S.p.A.**
**31, Foro Buonaparte**
**I-20121 Milan(IT)**

(72) Inventor: **Coassolo, Alfredo**
**34, via Gorizia**
**I-28100 Novara(IT)**
Inventor: **Gardano, Andrea**
**11, corso Roma**
**I-13039 Trino Vercelli(IT)**
Inventor: **Foa', Marco**
**19, via del Sabbione**
**I-28100 Novara(IT)**
Inventor: **Chapoy, L. Lawrence**
**60, via Davicini**
**I.28040 Lesa Novara(IT)**

(74) Representative: **Whalley, Kevin et al**
**MARKS & CLERK 57/60 Lincoln's Inn Fields**
**London WC2A 3LS(GB)**

(54) Polyesters of 4,4'-Dihydroxydicyclohexyl.

(57) Thermotropic semiflexible polyesters which are obtained by polycondensation of 4,4'-dihydroxydicyclohexyl with at least one $\alpha,\omega$-alkandioic acid or acid halide of general formula:

$$HOOC-(CH_2)_n-COOH \qquad (I)$$

wherein n is an integer from 4 to 12, or at least one alkyl derivative thereof.

EP 0 300 751 A2

## POLYESTERS OF 4,4'-DIHYDROXYDICYCLOHEXYL

The present invention relates to polyesters of 4,4'-dihydroxydicyclohexyl.

More particularly, the present invention relates to semiflexible thermotropic polyesters of 4,4'-dihydroxydicyclohexyl which can be easily processed in the molten state and which contain a mesogenic unit and a flexible unit in alternate sequence.

As is known thermotropic liquid crystal polymers containing cyclohexyl units are widely described in the literature. Generally, the cyclohexylic unit is derived either from 1,4-cyclohexandicarboxylic acid or from 1.4-cyclohexandiol.

In U.S. Patent No. US-A-4,342.862, polyesters are derived from polycondensation of an acidic mixture containing trans-1,4-cyclohexandicarboxylic acid and other aromatic diacids with substituted hydroquinones such as methyl, phenyl and chloro hydroquinones.

The preparation of thermotropic liquid crystal polyesters by polycondensation of the only transcyclohexandicarboxylic acid with some of the above mentioned substituted hydroquinones is described in "Macromolecules", vol. 19, p. 1824 (1986). Polyesters of trans-1,4-cyclohexandiol with substituted aromatic diacids or alternatively polyesters derived from mixtures of cis and trans isomers of 1,4-cyclohexandiol with aromatic or cycloaliphatic diacids are described in the same article.

Other thermotropic liquid crystal polymers containing a cyclohexane unit are the block copolyesters described in "Macromolecules", vol. 14, p. 1626 (1981), such as for instance polyoxy-trans-1,4-cyclohexylenoxy carbonyl-trans-1,4-cyclohexylencarbonyl-oxy-1,4-phenyl enoxyphthaloyl or the copolymers described in "Makromolecular Chemie 187", p. 1145 (1986), wherein the rigid structure of trans-1,4,cyclohexanedibenzoate is polycondensed with $\alpha,\omega$-alkandioic acids.

We have now discovered a new class of polyesters containing the 4,4'-dihydroxydicyclohexyl as a repeating unit. Moreover, it has been found that when the 4,4'-dihydroxydicyclohexyl is used in the trans-trans isomeric form, the polyesters are thermotropic products and, therefore, optically anisotropic in the molten state.

The present invention provides polyesters obtained by polycondensation of 4,4'-dihydroxydicyclohexyl with at least one $\alpha,\omega$-alkandioic acid of general formula:

$HOOC-(CH_2)_n-COOH$     (I)

wherein n is an integer from 4 to 12. or at least one alkyl derivative thereof having a chiral carbon atom wherein the alkyl radical contains from 1 to 6 carbon atoms.

The invention in particular provides semiflexible thermotropic polyesters obtained by polycondensation of 4,4'-dihydroxydicyclohexyl. essentially in its trans-trans form, with at least one $\alpha,\omega$-alkandioic acid of general formula:

$HOOC-(CH_2)_n-COOH$     (I)

wherein n is an integer from 4 to 12. or at least one alkyl derivative thereof having a chiral carbon atom wherein the alkyl radical contains from 1 to 6 carbon atoms.

Example of suitable alkandioic acids and alkyl derivatives thereof are sebacic acid, pimelic acid, suberic acid, azelaic acid, 1,10-bicarboxyldecane acid, 1,12-bicarboxyldodecane acid, 3-methyladipic acid. 3-terbutyl-adipic acid, etc.

According to a preferred aspect of the thermotropic polyesters of the present invention, 4.4'-dihydroxydi cyclohexyl is present at least 90%, and more preferably at least 95%, in the trans-trans isomeric form.

The thermotropic polyesters of the present invention are optically anisotropic in the molten state. As it is possible to ascertain by optical microscopy analysis with polarized light, they preferably have a melting point from $170°$ to $275°C$; an inherent viscosity, measured in a 60:40 phenoltetrachloroethane mixture at $30°C$ at a concentration of 2.5g/ℓ, from 0.4 to 1,8, and anisotropization temperatures of the molten product from $170°$ to $310°C$.

Furthermore, these polymers preferably have high crystallinity, above 30% by volume, and more preferably from 40 to 60% by volume. They also exhibit characteristics of good thermal stability.

Molecular weight and crystallinity can be increased by heating the particles of the polymer in inert atmosphere or in vacuum at temperatures very little below the melting point for a time varying from 1 to 20 hours.

Polymers of the present invention are suitable for obtaining shaped articles which can be prepared by the commonly used techniques for the transformation of thermoplastic polymers. such as injection molding or extrusion. can be processed as films or fibre. or can be used as matrices for composite materials based on inorganic fibres or fillers.

The possibility to vary within specified limits the melting temperature, by suitably selecting the diacid or the mixture of carboxylic diacids, make the polymers of the present invention particularly useful for the preparation of mixtures with a series of known polymers such as polyethylene, polypropylene, polyvinylchloride, polystyrenes, polymethylmethacrylate, ABS, polyamides, polycarbonates, polyarylates, polyesters such as polyethyleneterephthalate or polybutyleneterephthalate, polyphenyleneoxides, etc.

Any polymerization technique can be used for preparation of the polymers of the present invention However, solution polymerization is the preferred technique.

According to this technique, the halides of alkandioic diacids, obtained by known techniques, or a mixture of dihalides, are added to the 4,4'-dihydroxydicyclohexyl in molar ratio 1:1 in a suitable solvent. Preferred solvents are chlorinated solvents, either aliphatic or aromatic, such as methy'ene chloride, chlorobenzene and di-and tri-chloro benzenes.

The reaction temperature depends on the solvent used and is generally from 25° to 220°C. The reaction is generally carried out under a nitrogen stream and/or in the presence of a base to make easier the removal of the halogenated acid. The preferred base is pyridine.

The thus obtained polymer is then recovered by evaporation of the solvent of by precipitation with a suitable non-solvent, such as acetone, and successive filtration and washing.

Diacids used for polymerization are commercially available products whereas 4,4'-dihydroxybicyclohexyl can be prepared according to the process described in Italian patent application No. 20368 A/87, hereby incorporated by reference.

The thus obtained diol can be successively enriched in the trans-trans isomeric form by crystallizing the latter from the mixture with other cis-cis and cis-trans isomers by means of chloroform.

The invention will be further described with reference to the following illustrative Examples.

## Example 1

Into a four-necked glass round-bottomed flask provided with a mechanical agitator, cooler and inlet pipe for nitrogen, 2.46g (12.42mM) of 4,4'-dihydrodi cyclohexyl with a trans-trans isomer titre higher than 99%, 2.97g (12.42mM) of dichloride of sebacic acid, and 60ml of 1,2,4-trichlorobenzene were introduced.

The mixture was kept under agitation and under a nitrogen stream for 15 minutes at room temperature. Thereafter heating was begun. The temperature was raised to 220°C by means of a silicon oil bath.

The whole was kept at this temperature for 3 hours, until the release of HCl was practically completed.

The mixture was permitted to cool, always under agitation and a nitrogen stream, to 50°C. It was then poured into acetone. The precipitate was filtered off.

The thus obtained polymer was washed with acetone (twice), hot water (twice) and acetone/methanol (twice).

The finished product was dried under vacuum for 2 hours at 160°C.

The dried polymer had a melting temperature (Tm) of about 212°C, an isotropization temperature (Ti) of 271°C, an inherent viscosity of 1.33 (measured at the temperature of 30°C in a solvent consisting of a 60:40 mixture of phenol and tetrachloroethane at the concentration of 2.5g/l), and a crystallinity of 45% by volume.

The melting temperature and the isotropization temperature were measured by DSC (Differential Scanning Calorimetry) with a scanning of 20°C/min.

The polymer was optically anisotropic by microscopy with polarized light in the range of temperature between the Tm and the Ti.

## Examples 2-6

Other polyesters were prepared according to the method and in the same molar quantities of Example 1. The results are given in the following Table.

All these polymers were found to be optically anisotropic in the temperature range between the melting temperature (Tm) and the isotropization temperature (Ti).

| Example | (b) | Crystallinity % by volume | Inherent Viscosity | Melting Temp. Tm $^\circ$ C | Isotropization Temperature Ti $^\circ$ C |
|---------|-----|---------------------------|--------------------|------------------------------|------------------------------------------|
| 2 | b$_5$ | 49 | 1.46 | 216 | 305 |
| 3 | b$_6$ | 52 | 1.40 | 215 | 288 |
| 4 | b$_7$ | 49 | 0.96 | 180 | 269 |
| 5 | b$_{10}$ | 51 | 0.76 | 208 | 247 |
| 6 | b$_{12}$ | 52 | 1.40 | 204 | 225 |

b = dichlorides of $\alpha,\omega$-bicarboxylic aliphatic acids used in stoichiometric ratio with trans-trans- dihydroxy-dicyclohexyl with purity degrees higher than 99%;

b$_5$ = dichloride of pimelic acid;

b$_6$ = dichloride of suberic acid;

b$_7$ = dichloride of azelaic acid;

b$_{10}$ = dichloride of 1,10-bicarboxyldecane acid;

b$_{12}$ = dichloride of 1,12-bicarboxyldodecane acid.

The inherent viscosity was measured at 30$^\circ$ C in a solvent consisting of a 60:40 mixture of phenol and tetrachloroethane at a concentration of 2.5g/l, whereas Tm and Ti were measured by DSC (Differential Scanning Calorimetry) with a scanning of 20$^\circ$ C/minute.

Example 7

Into a four-necked round bottomed flask of 100ml capacity, provided with a mechanical agitator, cooler and nitrogen inlet pipe, under a slight nitrogen stream, 0.99g (5mM) of trans-trans 4,4'-dihydroxydicyclohexyl with a purity degree higher than 99%, 0.597 (2.5mM) of dichloride of sebacic acid, 0.668g (2.5mM) of dichloride of 1,10-bicarboxyldecane acid, and 40ml of 1,2,4-trichloro-benzene were introduced.

The mixture was kept under agitation and under a nitrogen stream for 15 minutes at room temperature. Thereafter, heating was begun until the temperature reached 220$^\circ$ C by means of a silicon oil bath.

The mixture was kept at this temperature for 3 hours until the release of HCl was practically completed. At the end of the polymerization, the solution was clear and very thick.

Always under a nitrogen stream and agitation, the oil bath was removed. The mixture was permitted to cool. When the reaction mixture was at 50$^\circ$ C, it was poured into acetone. The precipitate was filtered off.

The thus obtained polymer was washed with acetone (twice), with hot water (twice) and with acetone/methanol (twice).

The final product was dried under vacuum for 2 hours at 160$^\circ$ C.

The dried polymer had a melting temperature (Tm) of 179$^\circ$ C, an isotropization temperature (Ti) of 256$^\circ$ C, an inherent viscosity of 0.95, and a crystallinity of 65% by volume.

The polymer was found to be optically anisotropic by microscopy with polarized light in the temperature range between the Tm and Ti.

Example 8

By following the same working method of Example 1, the following quantities were introduced:

1.08g (5.45mM) of 4,4'-dihydroxydicyclohexyl having the following isomeric composition:

-93.6% of trans-trans isomer

-5.85% of cis-trans isomer

-0.55% of cis-cis isomer

1.303g (5.45mM) of dichloride of sebacic acid, and 40ml of 1,2,4-trichlorobenzene.

The dried polymer had a melting temperature (Tm) of 205$^\circ$ C, an isotropization temperature (Ti) of 254$^\circ$ C, an inherent viscosity of 0.81, and a crystallinity of 53% by volume.

The polymer was found to be optically anisotropic by microscopy with polymerized light in the temperature range between the Tm and Ti.

**Claims**

1. A polyester characterised by being obtained by polycondensation of 4,4'-dihydroxydicyclohexyl with at least one $\alpha,\omega$-alkandioic acid, or halide thereof, of the general formula:

$$HOOC\text{-}(CH_2)_n\text{-}COOH \qquad (I)$$

wherein n is an integer from 4 to 12, or at least one alkyl derivative thereof having a chiral carbon atom wherein the alkyl radical contains from 1 to 6 carbon atoms.

2. A semiflexible thermotropic polyester characterised by being obtained by polycondensation of 4,4'-dihydroxydicyclohexyl, essentially in its trans-trans isomeric form, with at least one $\alpha,\omega$-alkandioic acid, or halide thereof, of the general formula:

$$HOOC\text{-}(CH_2)_n\text{-}COOH \qquad (I)$$

wherein n is an integer from 4 to 12, or at least one alkyl derivative thereof having a chiral carbon atom wherein the alkyl radical contains from 1 to 6 carbon atoms.

3. A polyester as claimed in Claim 2, characterised in that the 4,4'-dihydroxydicyclohexyl is at least 90% in the trans-trans isomeric form.

4. A polyester as claimed in Claim 3, characterised in that the 4,4'-dihydroxydicyclohexyl is at least 95% in the trans-trans isomeric form.

5. A polyester as claimed in any of Claims 2 to 4, characterised by having a melting point from 170° to 275°C; an inherent viscosity measured in a 60:40 phenoltetrachloroethane mixture, at 30°C, at a concentration of 2.5g/l, from 0.4 to 1.8; and an anisotropization temperature of the molten product from 170° to 310°C.

6. A polyester as claimed in any of Claims 2 to 5, characterised by having a crystallinity higher than 30% by volume.

7. A polyester as claimed in Claim 6, characterised by having a crystallinity from 40 to 60% by volume.

8. A polyester as claimed in any of Claims 1 to 7, characterised in that the alkandioic acids and their alkyl derivatives are selected from sebacic acid, pimelic acid, suberic acid, azelaic acid, 1,10-bicarboxyldecane acid, 1,12-bicarboxyldodecane acid, 3-methyl-adipic acid, and 3-ter-butyl-adipic acid.

9. Use of polyesters as claimed in Claim 2 for obtaining shaped articles, injection molded or extruded, or as matrices for composite materials based on fibres or inorganic fillers.

10. Use of polyesters as claimed in Claim 1 in mixture with polyethylene, polypropylene, polyvinylchloride, polystyrenes, polymethacrylate, ABS, polyamides, polycarbonates, polyarylates, polyesters such as polyethyleneterephthalate or polybutyleneterephthalate, or polyphenylenoxides.